# EUROPEAN PATENT SPECIFICATION

(11) **EP 4 166 312 B1**
(45) Date of publication and mention of the grant of the patent: **06.11.2024**
(21) Application number: 22197712.7
(22) Date of filing: 26.09.2022
(51) Int. Cl.: B65F 9/00, B30B 9/30, B65G 69/00, B65G 69/28, F16P 3/00, A01F 21/00, B65G 67/20, F16P 3/14, F16P 3/02

(54) **PRESS FOR COMPACTING WASTE MATERIAL WITH ANTI-CRUSHING APPARATUS AND RELATED METHOD**
PRESSE ZUM VERDICHTEN VON ABFALLMATERIAL MIT ANTI-QUETSCH-VORRICHTUNG UND ENTSPRECHENDES VERFAHREN
PRESSE POUR LE COMPACTAGE DE DÉCHETS AVEC DISPOSITIF ANTI-ÉCRASEMENT ET PROCÉDÉ CORRESPONDANT

(30) Priority: 15.10.2021 IT 202100026516
(43) Date of publication of application: 19.04.2023
(73) Proprietor: Teuman S.r.l., 29010 Alseno (PC) (IT)
(72) Inventor: NICOLINI, Marco, 29010 ALSENO (PC) (IT)
(74) Representative: Silva, Valentina

(56) References cited:
- WO-A1-2016/153361
- IT-A1- PC20 090 009
- US-A- 6 138 557
- US-A1- 2005 191 158
- US-A1- 2013 312 205
- US-A1- 2015 338 021

## Description

### FIELD OF APPLICATION OF THE INVENTION

This invention fits in the field of presses whose function is to compact and reduce urban and similar solid waste into bales by reducing the volume thereof and facilitating the handling thereof.

### BACKGROUND

Various types of presses used for compacting urban or similar solid waste are known to the state of the art.

Said type of press is designed to solve problems arising from the storage and transport of considerable amounts of waste.

The function of this machine is in fact to compact and reduce the volume of urban and similar solid waste to facilitate the handling and storage thereof.

Said waste can be for example: paper, plastic, secondary solid fuel, etc.

Said presses generally comprise a compaction tunnel inside which a presser slides that compresses the material against an abutment, to form an agglomeration of waste generally called a "bale". Said abutment is configured to open and allow the transfer of the bale from the press to receiving means for transferring, for example, truck platforms.

The tunnel generally has a generally metallic structure having the shape of a parallelepiped supported on the ground by four legs.

The waste is normally inserted into the press by means of special conveyor belts, which unload by fall into a loading mouth of the press, for example a hopper operatively connected to the structure.

The waste is compacted by means of movable pressing means, e.g. connected to an oleodynamic compacting cylinder. The pressing means push the waste against the abutment by exerting the maximum pressure to form the compacted waste bale. Once compaction is finished, this abutment is raised, for example oleodynamically, leaving the entire internal section of the structure of the press completely free.

The pressing means then move the bale outside the structure of the press until it is completely transferred onto the means used for reception.

One problem with the step of transferring the bale from the press to the receiving means, is that between these two there might be personnel in charge of the press or other people, who would be subject to a high danger, risking being hit or crushed. In fact, the poor visibility due to the size of the receiving means could prevent the operator in charge of the means from noticing the presence of people, accidentally hitting them, or, once a receiving means is positioned, the operator in charge of the press could start the bale transfer operation, from the press to the receiving means without noticing the presence of people interposed between the two. Either way, the consequences might be disastrous.

IT PC20 090 009 A1 discloses a press for compacting waste material according to the preamble of claim 1. US 2013/312205 A1 and US 2015/338021 A1 disclose safety devices.

### EXPOSURE AND ADVANTAGES OF THE INVENTION

The technical problem at the basis of the present invention is that of providing a press for compacting waste material, in particular preferably urban solids, structurally and functionally conceived to overcome one or more of the limits set out above with reference to the aforementioned prior art.

In the context of the aforementioned problem, a main object of the invention is that of developing a press for compacting waste material, in particular preferably urban solids, which allows the operations to transfer the pressed material or bale onto the receiving means to be carried out safely.

A further object of the invention is also that of providing to the art a press for compacting waste material, in particular urban solids, within a simple, rational and rather low-cost solution.

In particular, the present invention provides a press for compacting waste material, in particular urban solids, according to claim 1 and a method of making a bale of waste material, in particular urban solids, within a press according to claim 7.

According to the invention, the structure of said tunnel is configured to cooperate with at least one anti-crushing apparatus extending away from the first end of the structure thus defining a safety area, in front of the opening, which is not accessible to the receiving means, to avoid the crushing of people possibly interposed between the press and the receiving means.

Thanks to this solution it is possible to make the unloading of the bale to receiving means safer.

The anti-crushing apparatus is movable between a safety position wherein it extends beyond the first end in the outlet direction of the bale and a clearance position wherein it does not create any encumbrance in proximity to the opening.

Said anti-crushing apparatus comprises at least one obstructing element connected to the press, via at least one arm, in proximity to said first end of the structure; said obstructing element being preferably a bar. It further comprises at least one actuator adapted to move the at least one arm so as to move the anti-crushing device between the safety position and the clearance position and vice versa.

Preferably, the anti-crushing device comprises at least one detection device adapted to detect the moving away of the receiving means, and activating the movement of the anti-crushing apparatus from the clearance position to the safety position.

Preferably, the anti-crushing apparatus comprises a control unit electrically connected to the at least one actuator and preferably to the at least one detection device, which manages the implementation of the anti-crushing device also based on the information collected by the at least one detection device.

This facilitates safety in the transfer of the bale to avoid accidents due to poor visibility at said first end.

The advantage of this solution is that it can be easily integrated into already existing presses.

Preferably said structure of the tunnel is shaped like a parallelepiped with a long side parallel to the ground.

In particular, the present invention also provides a method of making a bale of waste material, in particular preferably urban solids, within a press which provides:
- receiving said waste material within a compaction tunnel,
- compressing the waste material within a structure of the tunnel against an abutment element,
- raising said abutment element defining an opening preferably located at a first end of the structure.

According to the invention, said method provides for extending an anti-crushing apparatus beyond the first end of the press in the outlet direction of the bale, thus defining a safety area in front of the opening which is not accessible to the receiving means.

According to the invention, it further provides for raising said abutment element defining an opening preferably located at a first end of the structure, positioning the receiving means for transferring the bale and transferring the bale onto the receiving means through said opening.

According to the invention, the method provides, prior to transferring the bale to the receiving means, for detecting the presence of people/volumes/foreign bodies interposed between the press and the receiving means approaching said first end.

According to the invention, in the absence of people, it provides for moving the anti-crushing apparatus to the clearance position to allow the coupling between the press and the receiving means, thus allowing access to the safety area and transferring the bale onto the receiving means through said opening.

In particular, after transferring the bale to the receiving means, the device also detects the absence of the receiving means and starts the movement of the anti-crushing apparatus to a safety position so as to return the press to a safety condition.

In an embodiment not forming part of the invention, the present disclosure also provides an anti-crushing apparatus connected to a first end of a press for compacting waste material, in particular preferably urban solids, configured to avoid the approach of receiving means to the press, in the presence of people and made according to the characteristics described above.

These and other objects are achieved thanks to the characteristics of the invention set forth in the independent claims 1 and 7.

The dependent claims outline preferred and/or particularly advantageous aspects of the invention.

### BRIEF DESCRIPTION OF THE DRAWINGS

These and other features will be more apparent from the following description of some embodiments illustrated by way of non-limiting example in the accompanying drawings.

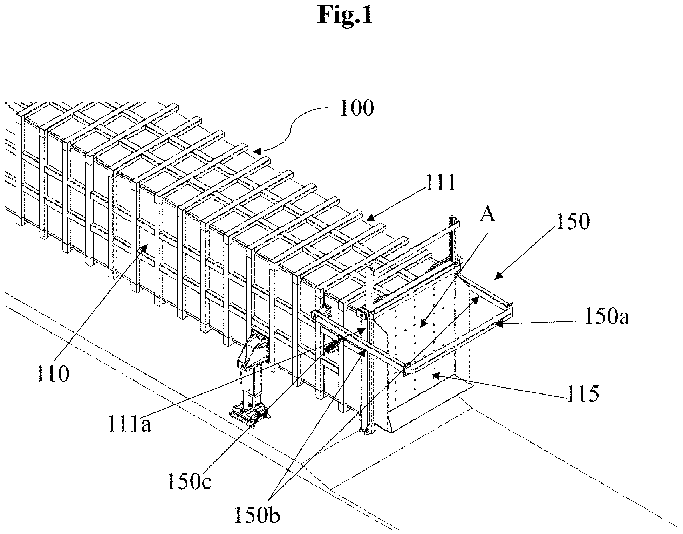

- Figure 1: illustrates an axonometric view of a press portion for compacting waste material according to the invention;
- Figure 2: illustrates a side view of a press and relative receiving means, with the anti-crushing apparatus in a safety position;
- Figure 3 illustrates a side view of a press and relative receiving means, with the anti-crushing apparatus in a clearance position;
- Figure 4 illustrates a side view of a press and relative receiving means coupled, with the anti-crushing apparatus in a clearance position;

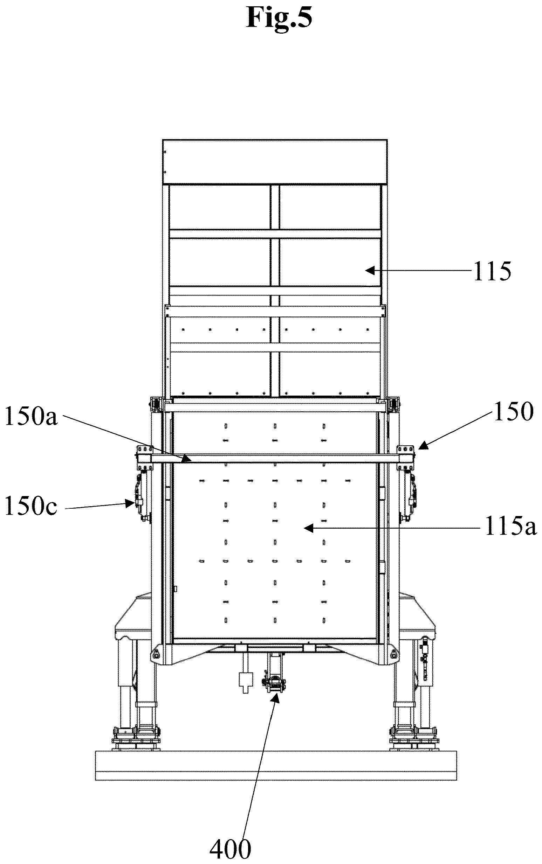

- Figure 5 illustrates a front view of a press with the anti-crushing apparatus in a safety position;

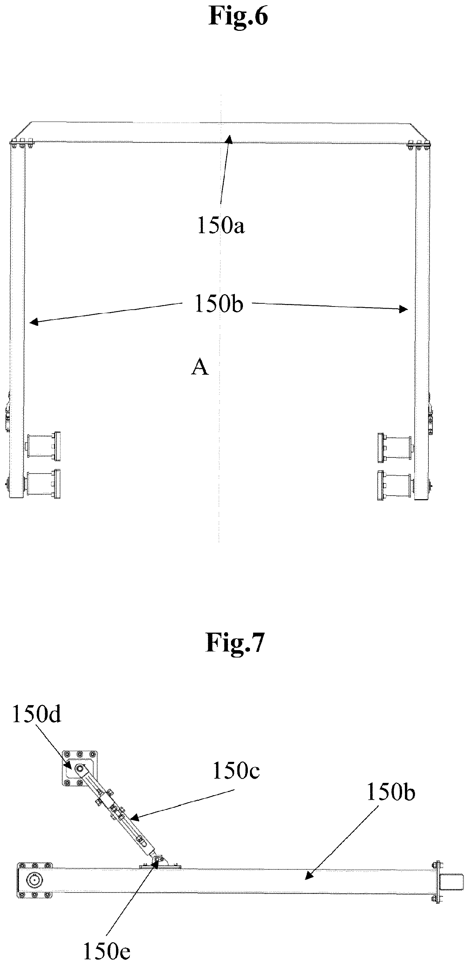

- Figure 6: illustrates a side view (above or below) of the anti-crushing device installed on the press;
- Figure 7: illustrates a side view of the anti-crushing device and the actuators installed on the press;

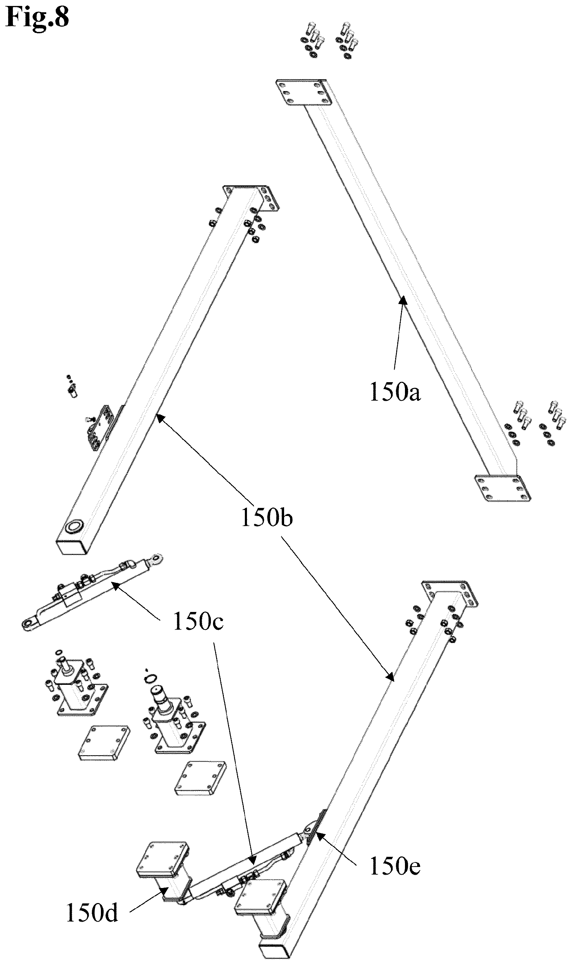

- Figure 8: illustrates an exploded view of the anti-crushing device and the actuators installed on the press;
- Figure 9a, 9b: illustrates an axonometric sectional view of a press with relative receiving means during the transfer of the bale.

### DESCRIPTION OF THE INVENTION

With particular reference to the figure, a press 100 for compacting waste material is depicted.

In particular, it is preferably urban solid waste.

In fact, said type of press is designed to compact and reduce urban and similar solid waste into bales 200, reducing the volume thereof and facilitating the handling thereof.

Said bales 200 may have adjustable size and weight.

According to an embodiment of the invention depicted in the figures, said press comprises a compaction tunnel 110 configured to receive waste.

Said tunnel 110 is defined by a structure 111, preferably metallic resting on the ground.

A preferred embodiment provides that the structure 111 is shaped like a parallelepiped or case.

In particular, the long side of the parallelepiped is parallel to the ground.

Preferably, said waste is inserted into the structure 111 of the tunnel 110 by means of a hopper 140.

As depicted in the figure, one embodiment provides that the waste enters the structure 111 by falling as the hopper 140 is located above the structure 111, on the side opposite the ground.

Thus, the tunnel 110 is in communication with the hopper 140 through which said waste material to be compacted is received.

Preferably, the waste material to be compacted arrives at the hopper 140 by means of special conveyor belts, not depicted in the figure, which by unloading by fall into the hopper 140 fill the press 100.

The press 100 may comprise a hatch 141 arranged horizontally below the hopper 140.

Said hatch 141 can be configured to translate from an open position wherein it allows the passage of waste into a closed position wherein it closes the passage between the hopper 140 and the tunnel 110.

Before the press 100 starts compacting the waste, preferably said hatch 141, moved for example by an oleodynamic cylinder, isolates the compaction tunnel 110 from the hopper 140.

The press 100 further comprises pressing means 120 configured to slide within the structure 111 of said tunnel 111.

The translation of said pressing means 120 pushes the waste material against an abutment element 115 until a sufficient pressure is exerted to compress said waste material and to form a bale 200.

Said pressing means 120 can translate by means of drive means preferably of the hydraulic type as they are able to exert high pressures.

Alternatively, solutions in which the drive means that move the pressing means 120 are of an electrical, pneumatic type, etc. also fall within the scope of protection of the invention.

Said pressing means may be, for example, a metal shovel having a size preferably similar to the internal cross-section of the structure 111 for obtaining a bale 200 with maximum size for said structure 111.

Said abutment element 115 is preferably located at a first end 111a of the structure 111.

In a preferred embodiment the abutment 115 defines a transverse wall, i.e. on the short side of the structure 111.

According to one aspect of the invention, said abutment 115 is movable in vertical direction to define an opening 115a that puts the tunnel 110 in communication with the outside.

Preferably, the size of the abutment 115 is such that it defines an opening 115a that leaves the entire internal section of the press 100 completely free.

In this way, the abutment 115 can pass from a closed position wherein it receives the thrust of the pressing means 120 during the waste compression step into an open position that allows the bale 200 thus formed to exit.

In fact, through the opening 115a the pressing means 120 push the bale 200 and transfer it outside the structure 111 of the tunnel 110.

Thus, the opening 115a will be larger than the size of the pressing means 120 that can exit therefrom for the complete ejection of the bale.

Said abutment 115 can be raised and lowered by means of movement means, for example of the oleodynamic type.

Also preferably the translation of the pressing means 120 is equally of the oleodynamic type. In the figure there is depicted a preferred embodiment that provides an oleodynamic cylinder with 3 extensions to be able to also perform the stroke that is additional to the compression stroke, to perform the ejection of the bale 200.

Said transfer generally provides that the bale 200 is received by receiving means 300.

Said receiving means 300 can be, for example, a truck with cases with closed structure or with a platform.

The conformation of the receiving means 300 generally comprises an inlet zone 301 through which the bale 200 is pushed.

The visibility of the operator of a receiving means 300 at said inlet zone 301 is generally poor, and the difficulty in the step of aligning the receiving means 300 with the press 100 could prevent the operator from noticing the presence of people interposed between the two.

Therefore, it is important that there is a safety system in place which prevents possible accidents during the step of transferring the bale 200 to the receiving means 300.

To do this, the prior art provides for the supervision by an operator who coordinates the transfer operations, in addition to the operator in charge of the press 100 and of the receiving means 300.

Therefore, it is the operator who guides the receiving means 300 for the correct position for the transfer of the bale 200 in total safety to be reached.

An object of the invention is a preferred embodiment that provides that the structure 111 of said tunnel 120 is configured to cooperate with at least one anti-crushing apparatus 150 extending away from the first end 111a thus defining an area A in front of the opening 115a which is not accessible to the receiving means 300 to avoid the crushing of people possibly interposed between the press 100 and the receiving means 300.

Said anti-crushing apparatus 150 is movable between a safety position O wherein it extends beyond the first end 111a in the outlet direction of the bale 200 and a clearance position V wherein it does not create any encumbrance in proximity to the opening 115°.

Said anti-crushing apparatus 150 is therefore adapted to avoid the approach of receiving means 300 to the press 100 when in the safety position O.

Thanks to this solution, the press 100 is provided with a new state-of-the-art safety system, but which can easily be integrated even on existing presses, adapted to avoid possible accidents during the step of approaching the receiving means 300 to the press 100. Therefore, if during the manoeuvre of approach to said first end 111a by a receiving means 300, there should be a person interposed between the two, the receiving means 300 would be stopped by the anti-crushing apparatus 150, which extending away from the first end 111a defines a safety area A, in front of the opening 115a, which is not accessible to the receiving means 300 avoiding the crushing of people possibly interposed between the press 100 and the receiving means 300.

Preferably, said safety area A extends away from said abutment element 115 and/or from the structure 111, by a distance between 1 m and 4 m, more preferably 2 m.

However, said safety area A has an extension which is at least sufficient to receive a person.

In the embodiment depicted in the figures, the anti-crushing apparatus 150 is movable between a safety position O wherein it extends beyond the first end 111a in the outlet direction of the bale 200 and a clearance position V wherein it does not create any encumbrance in proximity to the opening 115a.

Still according to the preferred embodiment shown in the figures, the anti-crushing apparatus 150 comprises an obstructing element 150a, preferably a bar connected to the press 100, via at least one arm 150b, in proximity to said first end 111a of the structure 111.

The anti-crushing apparatus 150 preferably comprises at least one actuator 150c adapted to move the at least one arm 150b so as to move the obstructing element 150a between the safety position O and the clearance position V and vice versa
A preferred solution comprises an anti-crushing device 150 comprising a bar extended horizontally and parallel to the abutment element 115,
This prevents the approach of a receiving means unless the anti-crushing device 150 is placed in vertical position.

Preferably the bar protrudes from the structure 111 and from the abutment element 115 by a couple of metres.

A preferred embodiment depicted in the figure provides a bar connected to the press 100, through two arms 150b.

In particular, two actuators 150c, are arranged to each actuate an arm 150b, so as to move the anti-crushing apparatus 150 between the safety position O, wherein it partially obstructs the opening 150a, and the clearance position V, wherein the bar 150a translates beyond the abutment element 115, positioning itself above it, and vice versa.

Preferably, said actuators 150c are connected at a first fixed end 150d to the structure 111, in proximity to said first end 111a, and at a second movable end 150e each to an arm 150b.

Said actuators 150c are preferably of the hydraulic type as they are able to exert high pressures.

Alternatively, solutions in which the actuators are of an electrical, pneumatic type, etc. fall within the scope of protection of the invention.

An advantageous aspect of the invention is that it also comprises a detection device 400.

Preferably, the detection device 400 detects the moving away of the receiving means 300, when the step of transferring the bale 200 has ended, and activates the movement of the anti-crushing apparatus 150 from the clearance position V to the safety position O.

Said detection device 400 may be, for example, a sensor, a camera, or whatever is available to a person skilled in the art to receive information on the moving away of the receiving means 300 with respect to the press 100.

According to the embodiment in the figures it is a proximity laser sensor.

Finally, preferably, the press 100 comprises a control unit electrically connected to the actuators 150c and preferably to the detection device 400 and/or to a possible control room of the press 100.

Said detection device 400 can directly communicate the information to the actuators 150c to activate them by generating the displacement of the anti-crushing device 150 from the clearance position V to the safety position O.

Alternatively, the detection device 400 sends a signal to the control unit that sends an activation command or not to the actuators.

Optionally, said anti-crushing apparatus 150 comprises an acoustic emitter and/or a light emitter, preferably activated by the control unit, which is preferably activated during the displacement of the anti-crushing device 150 from the clearance position V to the safety position O.

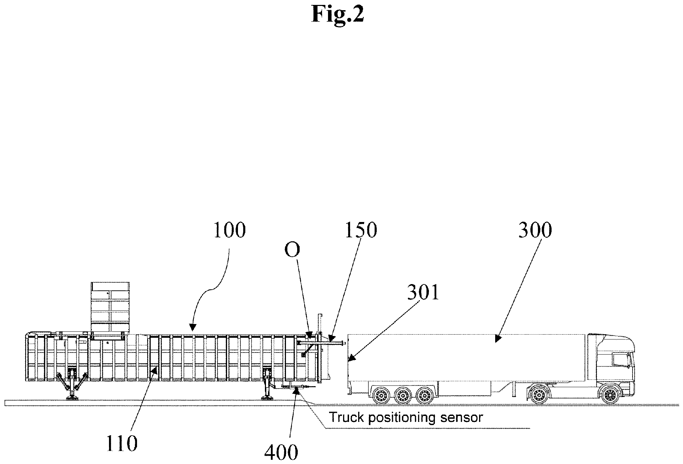

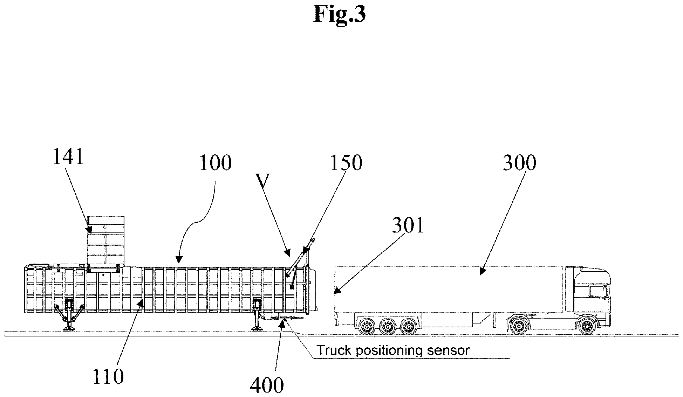

Figures 2,3,4 depict an example of positioning steps that provides for a first placement of the receiving means 300 with respect to the press 100, at a minimum distance imposed by the anti-crushing apparatus 150 in the safety position O, followed by the movement of the anti-crushing device 150 from a safety position O to a clearance position V by activating the actuators 150c by the control unit, to ensure that said opening 115a is accessible to the inlet zone 301.

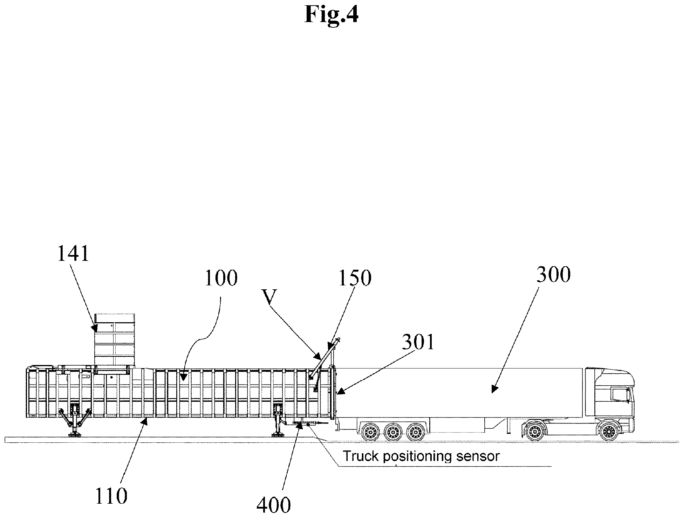

In Figure 4 the receiving means 300 substantially comes into contact with the opening 115a, the abutment element 115 is open and the bale 200 can be safely transferred from the press 100 to the receiving means 300.

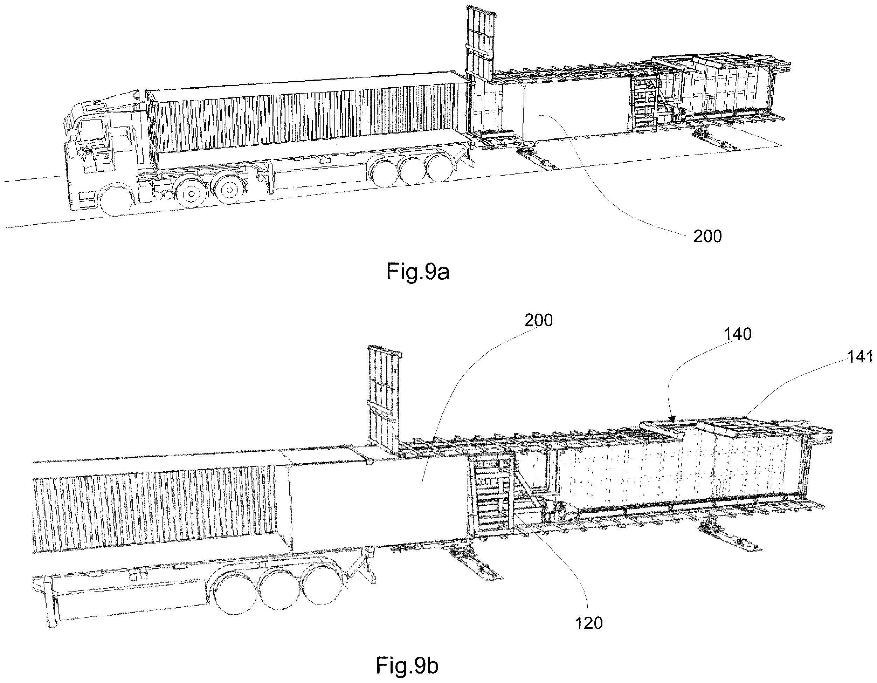

Figure 9 depicts an example of steps following the opening of the abutment 115 and in particular the steps of transferring the bale 200 from the press 100 (Figure 9a) to the receiving means 300 (Figure 9b).

Preferably said anti-crushing device 150 is made of steel.

An object of the invention is also the method of making a bale 200 of waste material, in particular preferably urban solids within a press 100 which provides:
- receiving said waste material within a compaction tunnel 110,
- compressing the waste material within a structure 111 of the tunnel 110 against an abutment element 115,
- extending an anti-crushing apparatus 150 in a safety position beyond the first end 111a of the press 100 in the outlet direction of the bale 200, thus defining a safety area A in front of the opening 115a which is not accessible to the receiving means 300.

Further, the method provides, before or after bringing the anti-crushing apparatus 150 into a safety position, to raise said abutment element 115 defining an opening 115a preferably located at a first end 111a of the structure 111.

Said method provides for positioning the receiving means 300 for transferring the bale 200 and transferring through said opening 115a the bale 200 onto the receiving means 300.

In this case, the receiving means 300 are distant from the lopening 115a due to the presence of the anti-crushing apparatus 150.

Alternatively, in order to optimise the transfer of the bale 200, in particular with the inlet zone 301 in proximity to the opening 115a of the press 100, before positioning the receiving means 300 and transferring the bale 200, the method provides for:
- detecting the presence of people/volumes/foreign bodies interposed between the press 100 and the receiving means 300 approaching said first end 111a;
- in the absence of people, moving the anti-crushing apparatus 150 to the clearance position V to allow the coupling between the press 100 and the receiving means 300, thus allowing access to the area A.

A preferred form of operation further provides, after transferring the bale 200, for:
- detecting the absence of the receiving means 300;
- moving the anti-crushing apparatus 150 back to the safety position O in order to restore the press 100 to a safety condition;
- closing said opening 115a.

It is however understood that some of said steps of the method are not necessarily in the described sequence but can also be reversed.

An object of the disclosure is also the anti-crushing apparatus 150 connected to a first end 111a of a press 100 for compacting waste material, in particular preferably urban solids, configured to avoid the approach of receiving means 300 to the press 100, in the presence of people and made according to the characteristics described above.

It is understood however that what is described above has an illustrative and non-limiting purpose, therefore, possible variants of detail that may be necessary for technical and/or functional reasons, are considered from now falling within the same protective scope defined by the claims indicated below.

## Claims

1. Press (100) for compacting waste material in particular urban solids, comprising a compaction tunnel (110) in communication with a hopper (140) through which said waste material to be compacted is received, pressing means (120) configured to translate within a structure (111) of said tunnel (110), which are configured to compress the waste material against an abutment element (115) and to form a bale (200), said abutment element (115) preferably located at a first end (111a) of the structure (111) and movable in vertical direction to define an opening (115a) through which the pressing means (120) transfer said bale (200) onto receiving means (300), **characterized in that** the press (100) comprises at least one anti-crushing apparatus (150) extending away from the first end (111a), thus defining a safety area (A) in front of the opening (115a) which is not accessible to the receiving means (300) to avoid the crushing of people possibly interposed between the press (100) and the receiving means (300), the anti-crushing apparatus (150) comprises:
- at least one obstructing element (150a) connected to the press (100) via at least one arm (150b), in proximity to said first end (111a) of the structure (111);
- at least one actuator (150c) adapted to move the at least one arm (150b) so as to move the obstructing element (150a) between the safety position (O) and the clearance position (V) and vice versa.

2. Press (100) according to claim 1, wherein the anti-crushing apparatus (150) is movable between a safety position (O), wherein it extends beyond the first end (111a) in the outlet direction of the bale (200), and a clearance position (V), wherein it does not create any encumbrances in proximity to the opening (115a).

3. Press (100) according to any one of the preceding claims, wherein said safety area (A) extends away from said abutment element (115) by a distance which is at least sufficient to receive a person.

4. Press (100) according to any one of the preceding claims, wherein the anti-crushing apparatus (150) further comprises:
- at least one detection device (400) adapted to detect the moving away of the receiving means (300) and allowing the movement of the anti-crushing apparatus (150) to be activated from the clearance position (V) to the safety position (O).

5. Press (100) according to any one of the preceding claims, wherein the anti-crushing apparatus (150) further comprises a control unit electrically connected to the actuators (150c) and/or preferably to the detection device (400).

6. Press (100) according to any one of the preceding claims, wherein said structure (111) of the tunnel (110) is shaped like a parallelepiped with a long side parallel to the ground.

7. Method of making a bale (200) of waste material, in particular urban solids, within a press (100), which provides:
- receiving said waste material within a compaction tunnel (110),
- compressing the waste material within a structure (111) of the tunnel (110), against an abutment element (115),
- extending an anti-crushing apparatus (150) beyond the first end (111a) of the press (100) in the outlet direction of the bale (200), thus defining a safety area (A) in front of the opening (115a) which is not accessible to the receiving means (300),
- raising said abutment element (115) defining an opening (115a) preferably located at a first end (111a) of the structure (111),
- detecting the presence of people/volumes/foreign bodies interposed between the press (100) and the receiving means (300) approaching said first end (111a);
- in the absence of people, moving the anti-crushing apparatus (150) to the clearance position (V) to allow the coupling between the press (100) and the receiving means (300), thus allowing access to the safety area (A),
- positioning the receiving means (300) for transferring the bale (200),
- transferring the bale (200) onto the receiving means (300) through said opening (115a).

8. Method according to claim 7, **characterized in that** after transferring the bale (200) to the receiving means (300), it provides:
- detecting the absence of the receiving means (300);
- moving the anti-crushing apparatus (150) back to the safety position (O) in order to restore the press (100) to a safety condition.

## Patentansprüche

1. Presse (100) zum Verdichten von Abfallmaterial, insbesondere von städtischen Feststoffen, umfassend einen Verdichtungstunnel (110) in Verbindung mit einem Trichter (140), durch den das zu verdichtende Abfallmaterial aufgenommen wird, Pressmittel (120), die so konfiguriert sind, dass sie sich innerhalb einer Struktur (111) des Tunnels (110) verschieben, und die so konfiguriert sind, dass sie das Abfallmaterial gegen ein Widerlagerelement (115) komprimieren und einen Ballen (200) bilden, wobei sich das Widerlagerelement (115) vorzugsweise an einem ersten Ende (111a) der Struktur (111) befindet und in vertikaler Richtung beweglich ist, um eine Öffnung (115a) zu definieren, durch die die Pressmittel (120) den Ballen (200) auf Aufnahmemittel (300) übertragen, **dadurch gekennzeichnet, dass** die Presse (100) mindestens eine Quetschschutzvorrichtung (150) umfasst, die sich in einem Abstand vom ersten Ende (111a) erstreckt und so eine Sicherheitszone (A) vor der Öffnung (115a) definiert, die nicht zugänglich für die Aufnahmemittel (300) ist, um die Quetschung von Personen zu vermeiden, die sich möglicherweise zwischen der Presse (100) und den Aufnahmemitteln (300) befinden. Die Quetschschutzvorrichtung (150) umfasst:
- mindestens ein Sperrelement (150a), das über mindestens einen Arm (150b) mit der Presse (100) in der Nähe des ersten Endes (111a) der Struktur (111) verbunden ist;
- mindestens einen Aktuator (150c), der so ausgelegt ist, dass er den mindestens einen Arm (150b) bewegt, um das Sperrelement (150a) zwischen der Sicherheitsposition (O) und der Freigabeposition (V) und umgekehrt zu bewegen.

2. Presse (100) nach Anspruch 1, wobei die Quetschschutzvorrichtung (150) zwischen einer Sicherheitsposition (O), in der sie über das erste Ende (111a) in Auslassrichtung des Ballens (200) hinausragt, und einer Freigabeposition (V), in der sie in der Nähe der Öffnung (115a) keine Behinderungen verursacht, bewegbar ist.

3. Presse (100) nach einem der vorhergehenden Ansprüche, wobei sich der Sicherheitsbereich (A) von dem Anschlagelement (115) über eine Distanz weg erstreckt, die zumindest ausreicht, um eine Person aufzunehmen.

4. Presse (100) nach einem der vorhergehenden Ansprüche, wobei die Quetschschutzvorrichtung (150) ferner umfasst:
- mindestens eine Detektionseinrichtung (400), die dazu ausgebildet ist, das Wegbewegen der Aufnahmemittel (300) zu detektieren und die Aktivierung der Bewegung der Quetschschutzvorrichtung (150) von der Freigabeposition (V) in die Sicherheitsposition (O) zu ermöglichen.

5. Presse (100) nach einem der vorhergehenden Ansprüche, wobei die Quetschschutzvorrichtung (150) ferner eine Steuereinheit umfasst, die elektrisch mit den Aktuatoren (150c) und/oder vorzugsweise mit der Detektionseinrichtung (400) verbunden ist.

6. Presse (100) nach einem der vorhergehenden Ansprüche, wobei die Struktur (111) des Tunnels (110) die Form eines Parallelepipeds mit einer langen Seite parallel zum Boden hat.

7. Verfahren zum Herstellen eines Ballens (200) aus Abfallmaterial, insbesondere aus städtischen Feststoffen, in einer Presse (100), das Folgendes vorsieht:
- Aufnehmen des Abfallmaterials in einem Verdichtungstunnel (110),
- Komprimieren des Abfallmaterials innerhalb einer Struktur (111) des Tunnels (110) gegen ein Widerlagerelement (115),
- Ausfahren einer Quetschschutzvorrichtung (150) über das erste Ende (111a) der Presse (100) in Auslaufrichtung des Ballens (200), so dass vor der Öffnung (115a) ein Sicherheitsbereich (A) definiert wird, der für die Aufnahmeeinrichtung (300) nicht zugänglich ist,
- Anheben des Widerlagerelements (115), wodurch eine Öffnung (115a) definiert wird, die sich vorzugsweise an einem ersten Ende (111a) der Struktur (111) befindet,
- Erkennen der Anwesenheit von Personen/Volumen/Fremdkörpern, die sich zwischen der Presse (100) und der Aufnahmeeinrichtung (300) befinden und sich dem ersten Ende (111a) nähern;
- bei Abwesenheit von Personen, Bewegen der Quetschschutzvorrichtung (150) in die Freigabeposition (V), um die Kupplung zwischen der Presse (100) und der Aufnahmevorrichtung (300) zu ermöglichen und so den Zugang zum Sicherheitsbereich (A) freizugeben,
- Positionieren der Aufnahmemittel (300) zum Übertragen des Ballens (200),
- Übertragen des Ballens (200) auf die Aufnahmemittel (300) durch die Öffnung (115a).

8. Verfahren nach Anspruch 7, **dadurch gekennzeichnet, dass** es nach der Übergabe des Ballens (200) an die Aufnahmemittel (300) Folgendes vorsieht:
- Erkennen der Abwesenheit der Aufnahmemittel (300) ;
- Zurückbewegen der Quetschschutzvorrichtung (150) in die Sicherheitsposition (O), um die Presse (100) wieder in einen Sicherheitszustand zu versetzen.

## Revendications

1. Presse (100) pour compacter des déchets, notamment des solides urbains, comprenant un tunnel de compactage (110) en communication avec une trémie (140) à travers laquelle sont reçus lesdits déchets à compacter, des moyens de pressage (120) configurés pour se déplacer en translation à l'intérieur d'une structure (111) dudit tunnel (110), qui sont configurés pour comprimer les déchets contre un élément de butée (115) et pour former une balle (200), ledit élément de butée (115) étant de préférence situé à une première extrémité (111a) de la structure (111) et étant mobile dans una direction verticale pour définir une ouverture (115a) à travers laquelle les moyens de pressage (120) transfèrent ladite balle (200) sur des moyens de réception (300), **caractérisée en ce que** la presse (100) comprend au moins un dispositif anti-écrasement (150) s'étendant à distance de la première extrémité (111a), définissant ainsi une zone de sécurité (A) devant l'ouverture (115a) qui n'est pas accessible aux moyens de réception (300) pour éviter l'écrasement de personnes éventuellement interposées entre la presse (100) et les moyens de réception (300). Le dispositif anti-écrasement (150) comprend:
- au moins un élément d'obstruction (150a) relié à la presse (100) par l'intermédiaire d'au moins un bras (150b), à proximité de ladite première extrémité (111a) de la structure (111);
- au moins un actionneur (150c) adapté pour déplacer le au moins un bras (150b) de manière à déplacer l'élément d'obstruction (150a) entre la position de sécurité (O) et la position de dégagement (V) et inversement.

2. Presse (100) selon la revendication 1, dans laquelle le dispositif anti-écrasement (150) est mobile entre une position de sécurité (O), dans laquelle il s'étend au-delà de la première extrémité (111a) dans la direction de sortie de la balle (200), et une position de dégagement (V), dans laquelle il ne crée pas d'encombrement à proximité de l'ouverture (115a).

3. Presse (100) selon l'une quelconque des revendications précédentes, dans laquelle ladite zone de sécurité (A) s'étend à distance dudit élément de butée (115) sur une distance au moins suffisante pour recevoir une personne.

4. Presse (100) selon l'une quelconque des revendications précédentes, dans laquelle le dispositif anti-écrasement (150) comprend aussi:
- au moins un dispositif de détection (400) adapté pour détecter l'éloignement des moyens de réception (300) et permettant d'activer le déplacement du dispositif anti-écrasement (150) de la position de dégagement (V) à la position de sécurité (O).

5. Presse (100) selon l'une quelconque des revendications précédentes, dans laquelle le dispositif anti-écrasement (150) comprend en outre une unité de commande connectée électriquement aux actionneurs (150c) et/ou de préférence au dispositif de détection (400).

6. Presse (100) selon l'une quelconque des revendications précédentes, dans laquelle ladite structure (111) du tunnel (110) a la forme d'un parallélépipède dont le côté long est parallèle au sol.

7. Procédé de fabrication d'une balle (200) de déchets, notamment de solides urbains, à l'intérieur d'une presse (100), qui prévoit:
- recevoir lesdits déchets dans un tunnel de compactage (110),
- comprimer les déchets à l'intérieur d'une structure (111) du tunnel (110), contre un élément de butée (115),
- étendre un dispositif anti-écrasement (150) au-delà de la première extrémité (111a) de la presse (100) dans la direction de sortie de la balle (200), définissant ainsi une zone de sécurité (A) devant l'ouverture (115a) qui n'est pas accessible aux moyens de réception (300),
- soulever ledit élément de butée (115) en définissant une ouverture (115a) située de préférence à une première extrémité (111a) de la structure (111),
- détecter la présence de personnes/volumes/corps étrangers interposés entre la presse (100) et les moyens de réception (300) s'approchant de ladite première extrémité (111a);
- en l'absence de personnes, déplacer le dispositif anti-écrasement (150) vers la position de dégagement (V) pour permettre l'accouplement entre la presse (100) et les moyens de réception (300), permettant ainsi un accès à la zone de sécurité (A),
- positionner les moyens de réception (300) pour transférer la balle (200),
- transférer la balle (200) sur les moyens de réception (300) par ladite ouverture (115a).

8. Procédé selon la revendication 7, **caractérisé en ce qu'**après le transfert de la balle (200) vers les moyens de réception (300), il prévoit:
- détecter l'absence des moyens de réception (300);
- ramener le dispositif anti-écrasement (150) à la position de sécurité (O) afin de ramener la presse (100) dans un état de sécurité.
